# FASCICULE DE BREVET EUROPEEN

(11) **EP 1 753 695 B1**
(45) Date de publication et mention de la délivrance du brevet: **23.01.2019**
(21) Numéro de dépôt: 05776387.2
(22) Date de dépôt: 07.06.2005
(51) Int. Cl.: C01B 33/037, H05B 6/24

(54) **INSTALLATION D'AFFINAGE DE SILICIUM**
SILIZIUMVERFEINERUNGSANLAGE
SILICON REFINING INSTALLATION

(30) Priorité: 07.06.2004 FR 0451117
(43) Date de publication de la demande: 21.02.2007
(73) Titulaire: CENTRE NATIONAL DE LA RECHERCHE SCIENTIFIQUE -CNRS-, 75794 Paris Cedex 16 (FR); FERROPEM, 73000 Chambery (FR)
(72) Inventeur: TRASSY, Christian, F-38100 GRENOBLE (FR); DELANNOY, Yves, F-38920 CROLLES (FR); FOURMOND, Erwann, F-69006 LYON (FR); NDZOGHA, Cyrille, F-59770 MARLY (FR); BALUAIS, Gérard, F-73000 CHAMBERY (FR); CARATINI, Yves, F-73490 LA RAVOIRE (FR)
(74) Mandataire: Novagraaf Technologies
(86) Numéro de dépôt international: PCT/FR2005/050422
(87) Numéro de publication internationale: WO 2005/123585

(56) Documents cités:
- EP-A- 0 169 765
- EP-A- 0 459 421
- WO-A-99/32402
- WO-A-03/067166
- DE-A1- 10 042 151
- GB-A- 2 121 313
- PATENT ABSTRACTS OF JAPAN vol. 018, no. 147 (M-1575), 11 mars 1994 (1994-03-11) & JP 05 322451 A (AGENCY OF IND SCIENCE & TECHNOL; others: 01), 7 décembre 1993 (1993-12-07)
- DATABASE WPI Section Ch, Week 199421 Derwent Publications Ltd., London, GB; Class M22, AN 1994-173038 XP002317151 & JP 06 114532 A (DAIDO TOKUSHUKO KK) 26 avril 1994 (1994-04-26)
- ALEMANY C ET AL: "Refining of metallurgical-grade silicon by inductive plasma" SOLAR ENERGY MATERIALS AND SOLAR CELLS, ELSEVIER SCIENCE PUBLISHERS, AMSTERDAM, NL, vol. 72, no. 1-4, avril 2002 (2002-04), pages 41-48, XP004339748 ISSN: 0927-0248

## Description

### Domaine de l'invention

La présente invention concerne la fabrication de silicium pour constituer des cellules de production d'énergie électrique par effet photovoltaïque. Ce silicium de qualité supérieure au silicium métallurgique est généralement désigné sous le vocable silicium photovoltaïque (Solar Grade ou SoG en anglais).

### Exposé de l'art antérieur

Actuellement, le silicium destiné aux techniques photovoltaïques est essentiellement constitué des rebuts de l'industrie microélectronique, car le silicium utilisé pour des applications photovoltaïques peut contenir une proportion d'impuretés (de l'ordre d'une partie par million) moins critique que le niveau d'impureté (de l'ordre d'une partie par billion) qui est généralement requis en microélectronique.

Comme deuxième source de silicium pour produire du silicium adapté aux produits photovoltaïques, on a déjà proposé d'affiner le silicium fabriqué pour des applications métallurgiques. Le silicium utilisé en métallurgie contient à la base plusieurs pourcents d'impuretés parmi lesquelles le fer, le titane, le bore, le phosphore, etc. qu'il est nécessaire d'éliminer (jusqu'à des teneurs nettement inférieures).

Par exemple, le document EP-A-0459421 décrit un procédé de purification du silicium consistant à diriger un plasma d'arc vers la surface d'un bain de silicium contenu dans un creuset chaud à paroi de silice (SiO₂). La vitesse élevée du plasma provoque un mouvement du bain dont l'intensité dépend de la puissance du plasma. Un creuset chaud à paroi en matériau réfractaire constitue une forme de creuset industriel couramment utilisé dans l'industrie métallurgique.

Un inconvénient de cette technique est que le silicium déjà chauffé par l'excitation électromagnétique de la bobine entourant le creuset chaud subit un échauffement supplémentaire dû au plasma. Cet échauffement supplémentaire est typiquement de plusieurs centaines de degrés et entraîne que le bain de silicium atteint la température de fusion de la paroi de silice. En effet, la température de fusion de la silice est de l'ordre de 200° supérieure à celle du silicium. Sous l'effet de la fusion des parois, il y a donc un risque du point de vue de la sécurité de l'installation en raison de la fuite possible de métal liquide.

On aurait pu penser accroître l'épaisseur des parois de silice. Toutefois, cela écarte l'enroulement inductif d'excitation qui sert au chauffage du silicium et pose alors des problèmes de rendement. En pratique, un creuset chaud a une épaisseur de paroi limite de moins de quelques centimètres.

Un autre inconvénient des creusets chauds, qui sont généralement monoblocs pour des questions d'étanchéité, est qu'en cas de solidification accidentelle du silicium fondu à l'intérieur du creuset, l'expansion du silicium liée au refroidissement provoque une casse du creuset qui n'est alors par réparable. Cet inconvénient est particulièrement gênant dans des applications industrielles.

En effet, le silicium a pour caractéristique d'être un des rares métaux qui se dilate de façon importante lors de son refroidissement et notamment lors de son passage de phase liquide en phase solide. Sa densité passe de 2,34 à l'état solide à environ 2,6 à l'état liquide. La dilation qui en découle lors du refroidissement est suffisamment importante pour provoquer la casse d'un creuset.

C'est, entre autres, pour cette raison que le silicium ne peut pas être affiné dans un auto-creuset (creuset formé par le matériau (silicium) lui-même) car son expansion lors du refroidissement endommagerait l'ensemble de l'installation.

Dans un creuset chaud inductif, le nombre de tours de l'enroulement inductif autour du creuset est relativement faible. Généralement, pour une répartition homogène du champ, on prévoit d'une demi-douzaine à une douzaine de spires qui sont réparties dans la hauteur du creuset. Les spires sont espacées les unes des autres dans la hauteur du creuset, toujours pour des raisons d'homogénéité du champ, et aussi pour des raisons d'isolation électrique. Par conséquent, même si le bobinage est lui-même refroidi (par exemple, par circulation d'eau à l'intérieur des spires), cela n'est pas suffisant pour refroidir la paroi externe du creuset, ne serait-ce qu'en raison de l'écart entre les différents tours dans la hauteur de celui-ci.

On a par ailleurs déjà proposé d'utiliser un creuset froid inductif (ou creuset sectorisé) pour affiner du silicium. Le document EP-1 042 224 du demandeur décrit un tel procédé d'installation d'affinage du silicium à partir d'un creuset froid inductif au moyen duquel est organisé un brassage turbulent du bain de silicium, un plasma produit par une torche à plasma inductive étant dirigé vers la surface du bain pour éliminer les impuretés.

L'utilisation d'un creuset froid est actuellement limitée par les pertes thermiques dues aux parois métalliques du creuset qui sont refroidies par eau. En pratique, on arrive à une limite de température du bain qui est juste au-dessus de la température de fusion de silicium (1410°C).

Or, le coût du silicium purifié produit est essentiellement lié à la durée du traitement qui conditionne la quantité d'énergie nécessaire. Pour réduire cette durée, il serait souhaitable de pouvoir augmenter la température du bain, ce qui n'est aujourd'hui pas possible avec un creuset froid inductif.

Par ailleurs, dans un creuset froid inductif, le bain de silicium ne touche pas les parois du creuset dans la partie haute de celui-ci en raison du brassage turbulent. Il en découle un choc thermique lorsque le silicium à 1410° touche la paroi froide en cas de coupure de l'excitation de la bobine du creuset (que la coupure soit accidentelle ou volontaire). Ce choc thermique engendre un risque de percement de la paroi métallique (généralement en cuivre) du creuset. L'eau de refroidissement du creuset peut alors entrer en contact avec le métal liquide, créant un risque d'accident important.

Le document JP05322451 divulgue également un creuset froid inductif en cuivre comprenant une paroi latérale du creuset divisée en une pluralité de segments à travers des matériaux de joint d'isolation. Chacun des segments est formé avec un trou d'eau de refroidissement. La surface de la paroi interne du creuset est revêtue d'un revêtement réfractaire. Avec un tel agencement, même s'il est possible que le métal en fusion soit en contact avec la surface de la paroi interne en raison d'une oscillation de la colonne d'huile dans le creuset, le métal fondu ne peut pas se solidifier immédiatement en raison d'une action d'isolation thermique du matériau enduit.

### Résumé de l'invention

La présente invention vise à proposer une installation de purification de silicium notamment destinée à des applications photovoltaïques qui pallie les inconvénients des installations d'affinage classiques.

L'invention vise en particulier à proposer une solution qui diminue le coût de production du silicium en autorisant un accroissement de la température du bain.

L'invention vise également à améliorer la sécurité de l'installation en cas de refroidissement accidentel ou volontaire du bain de silicium entraînant sa solidification.

L'invention vise également à proposer une solution compatible avec l'emploi d'une torche à plasma dirigée vers la surface du bain pour éliminer les impuretés.

La présente invention est une installation d'affinage du silicium, comportant un creuset froid inductif sectorisé ayant une paroi externe sectorisée (1), caractérisée en ce que l'intérieur de la paroi externe sectorisée est garni d'une paroi interne sectorisée (4), en matériau réfractaire, les secteurs successifs (41) de la paroi interne sectorisée étant disposés les uns contre les autres, et, les séparations que lesdits secteurs de la paroi interne sectorisée (4) présentent entre eux :
- ne sont pas radialement alignées avec les séparations que présentent entre eux les secteurs de la paroi externe sectorisée (1).

Selon un mode de réalisation de la présente invention, le fond du creuset est constitué d'au moins deux plaques en matériaux réfractaire superposées.

Selon un mode de réalisation de la présente invention, une torche à plasma inductive est dirigée vers la surface libre d'une charge de silicium contenue dans le creuset.

Selon un mode de réalisation de la présente invention, une plaque métallique est prévue en dessous d'une ou des plaques réfractaires de fond.

Selon un mode de réalisation de la présente invention, ladite paroi réfractaire est en silice.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, de façon très schématique, une vue en coupe d'une installation d'affinage du silicium selon un mode de réalisation de la présente invention ; et
la figure 2 est une vue partielle en coupe transversale de l'installation de la figure 1.

### Description détaillée

Par souci de clarté, les mêmes éléments ont été désignés par de mêmes références aux différentes figures. Seuls les constituants utiles à la compréhension de l'invention ont été représentés aux figures et seront décrits par la suite. En particulier, les détails constitutifs ainsi que les gaz employés dans la torche à plasma n'ont pas été détaillés, l'invention étant compatible avec des procédés classiques d'affinage au moyen d'une torche à plasma. De plus, les fréquences et intensités d'excitation des enroulements inductifs n'ont pas été détaillées, l'invention étant là encore compatible avec les techniques habituelles de détermination de ces fréquences et intensités.

Une caractéristique de la présente invention est de revêtir la paroi interne d'un creuset froid inductif d'un garnissage réfractaire. De préférence, ce garnissage n'est pas monobloc mais est réalisé, comme le creuset froid, sous la forme de secteurs verticaux, le fond du creuset étant constitué de plaques (sole) réfractaires superposées.

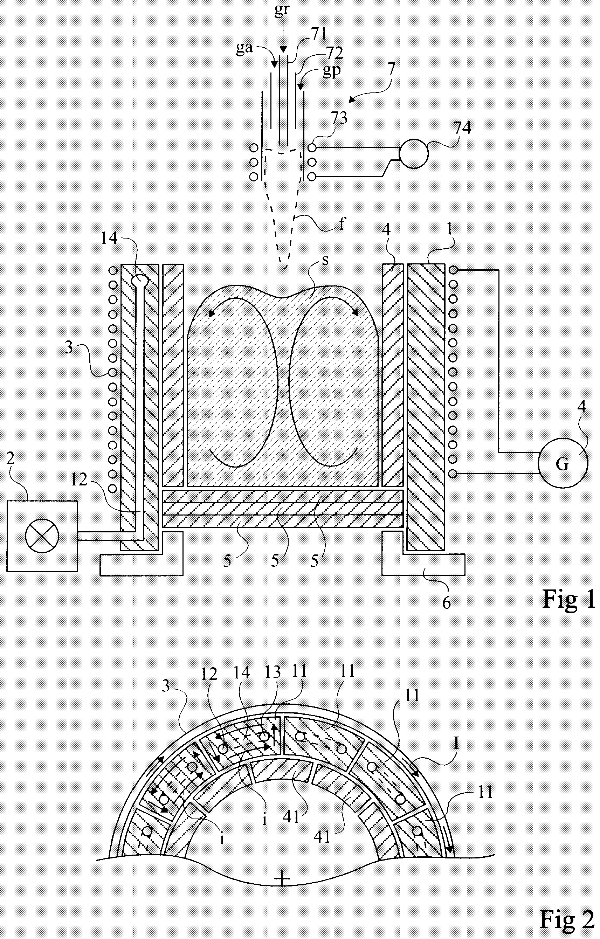

Les figures 1 et 2 représentent de façon très schématique, respectivement, un mode de réalisation d'une installation de purification de silicium par une coupe verticale et une vue en coupe transversale du creuset de cette installation.

A la manière d'un creuset froid inductif classique, le creuset de l'invention comporte une paroi latérale 1 refroidie et sectorisée. Comme l'illustre la figure 2, chaque secteur 11 de la paroi 1 comporte au moins deux conduites 12 et 13 de circulation d'un liquide de refroidissement (généralement de l'eau). Cette circulation est verticale depuis l'une des extrémités de chaque secteur et les conduites 12 et 13 verticales sont reliées l'une à l'autre à l'autre extrémité du secteur par un tronçon horizontal 14. De façon classique dans les applications à creuset froid sectorisées, l'installation comprend un élément 2 (figure 1) destiné à organiser la circulation de l'eau dans les conduites 12 et 13 de chaque secteur.

A la manière d'un creuset froid inductif, un enroulement 3 est bobiné autour de la paroi verticale 1 de façon à permettre un chauffage par induction du silicium s contenu dans le creuset. Ce bobinage 3 est alimenté par un générateur 4 (G) basse fréquence (typiquement de quelques dizaines à quelques milliers de hertz). Comme l'illustre les flèches de la figure 1, lorsqu'un courant I circule dans la bobine 3, des courants i sont induits dans les secteurs 11 qui induisent eux-mêmes un chauffage par induction du silicium du creuset. Pour que cette circulation dans les secteurs 11 soit possible, ceux-ci sont en métal (par exemple en cuivre) et sont séparés les uns des autres et de la bobine par un diélectrique (de l'air ou tout autre isolant par exemple, silice ou mica).

Selon l'invention, la face interne de la paroi 1 est garnie d'une paroi 4 en un matériau réfractaire. Par ailleurs, le fond du creuset est constitué d'une ou plusieurs plaques 5 également en matériau réfractaire, l'ensemble reposant par un piétement 6 sur un socle (non représenté). Le cas échéant, les soles 5 du bas du creuset sont complétées par une plaque métallique externe servant d'éléments de transfert thermiques vers l'air externe ou la paroi.

La paroi 4 est elle-même constituée de plusieurs secteurs verticaux 41 pouvant être disposés à l'in-térieur de la paroi 1 les uns contre les autres, de telle manière que leurs séparations ne soient pas radialement alignées avec les séparations des secteurs 11 de la paroi refroidie.

L'avantage d'utiliser une paroi 4 sectorisée par rapport à une paroi d'un seul tenant est que cela facilite la maintenance de l'installation dans le cas où l'un des secteurs viendrait à être endommagé. Cela est rendu possible car la paroi 4 n'est, selon l'invention, plus chargée d'un maintien mécanique.

De préférence, le matériau réfractaire choisi pour les parois 4 est de l'alumine, de la zircone et de façon encore plus préférée de la silice.

Un avantage qu'il y a à utiliser de la silice dans une application en traitement du silicium est que cela minimise l'introduction d'impuretés dans le bain de silicium à traiter provenant de la paroi elle-même.

Comme dans une installation de purification par plasma classique, une torche à plasma inductive 7 est placée de façon à ce que la flamme f du plasma vienne lécher la surface libre du bain de silicium s. La fonction du plasma est de créer un milieu formé des radicaux libres et des ions du ou des gaz plasmagènes au voisinage de la surface libre du bain. L'atmosphère ainsi créée est extrêmement réactive et les impuretés présentes à la surface du bain se combinent avec le gaz réactif du plasma et deviennent volatiles (ou, à l'inverse solides) à la température de surface du bain. L'ensemble de l'installation est maintenu sous une atmosphère contrôlée, ce qui permet d'évacuer au fur et à mesure les molécules contenant les impuretés.

La torche à plasma 7 comporte, par exemple, une amenée 71 de gaz réactif gr au centre de la torche, une amenée concentrique 72 d'un gaz auxiliaire ga (par exemple, de l'argon). Un gaz plasma gp (par exemple, également de l'argon) est en outre véhiculé de façon concentrique au gaz auxiliaire ga. Une bobine d'induction 73 entoure l'extrémité libre de la torche 7 de sorte à créer le plasma inductif. La bobine 73 est généralement excitée par un courant alternatif à une fréquence de l'ordre du mégahertz par un générateur 74.

De façon classique, différents gaz réactifs peuvent être injectés dans le plasma, soit simultanément soit successivement pour leurs actions sélectives sur les éléments indésirables.

Au départ, le creuset est rempli de poudre, de copeaux, ou de débris de silicium. Le silicium étant semiconducteur, il doit être préchauffé avant de devenir progressivement conducteur (autour de 800°C) et de pouvoir alors être chauffé par induction au moyen de la bobine 3 du creuset 1.

Par exemple, on actionne d'abord la torche à plasma 7 pour préchauffer la charge de silicium solide et la porter à la température permettant d'obtenir un couplage avec le champ à basse fréquence créé par la bobine 3 du creuset. Le gaz utilisé dans cette phase de préchauffage est de préférence de l'argon. Le cas échéant, de l'hydrogène est introduit comme gaz réactif pour augmenter la conductivité thermique du plasma et accélérer ainsi le préchauffage de la charge de silicium.

A la fin de cette phase de démarrage, le silicium est entièrement fondu et l'énergie nécessaire au maintien de cet état fondu est essentiellement fournie par la bobine du creuset.

Dans une deuxième phase, on favorise un brassage turbulent du bain dans le sens des flèches à la figure 1 et on introduit, dans le plasma, simultanément ou séquentiellement, un ou plusieurs gaz réactifs appropriés à l'élimination des impuretés qui, en se combinant avec un gaz réactif à la surface du bain s, forment des espèces volatiles qui sont vaporisées.

Dans une troisième phase éventuelle, on peut doper le silicium ainsi purifié par des éléments favorisant le pouvoir photovoltaïque du silicium polycristallin par passivation des défauts, par exemple, en le dopant avec de l'hydrogène.

Le silicium, une fois affiné et le cas échéant dopé, est vidé du creuset. Pour cela, le creuset est en pratique, comme cela est courant dans les installations de traitement métallurgiques, monté sur un élément rotatif (non représenté) permettant d'en renverser le contenu.

L'utilisation d'un creuset froid inductif chauffant par induction le matériau contenu dans en quelque sorte un creuset chaud (paroi 4), comme le prévoit la présente invention présente de nombreux avantages.

Le creuset froid permet non seulement de limiter la température externe du creuset chaud mais en plus constitue une enceinte de sécurité en cas de rupture du creuset chaud. En particulier, le gradient de température imposé par la paroi froide entre l'intérieur et l'extérieur du creuset fait qu'en cas de fuite au niveau du creuset chaud, le silicium fondu qui aurait tendance à s'échapper vers l'extérieur sera d'abord refroidi en traversant cette paroi 4 avant d'atteindre le creuset froid 1.

Un autre avantage d'utiliser un creuset froid sectorisé, est qu'il supporte une déformation mécanique susceptible d'être réparée.

Un autre avantage de l'invention est que le gradient thermique permet d'augmenter la température du bain de silicium par rapport à l'utilisation d'un creuset froid seul. On réduit alors la durée du traitement du silicium.

Un autre avantage est que, même en cas d'échauffement supplémentaire dû au plasma, la fusion de la paroi réfractaire sur sa face intérieure ne se propage pas sur toute l'épaisseur de la paroi du fait du refroidissement apporté par le creuset externe. On évite ainsi tout risque de fuite de métal liquide.

Un autre avantage de l'invention est que les risques de percement du creuset froid, traditionnellement liés au choc thermique en cas d'arrêt de l'alimentation de la bobine, n'existent pas grâce à la présence du creuset réfractaire.

En partie basse du creuset, plusieurs épaisseurs de matériau réfractaire sont suffisantes pour éviter tout problème. Comme il n'y a pas d'induction dans le fond, on peut augmenter sans limite l'épaisseur du matériau réfractaire.

En pratique, les mesures en température de surface ont montré une possibilité d'accroître la température d'au moins 150° dans un creuset selon l'invention par rapport à un creuset froid inductif traditionnel. Cette augmentation de température de surface permet, lors du traitement de purification, d'augmenter le taux d'oxygène dans le plasma (d'un facteur d'environ 2,5) avant l'apparition de la couche de laitier qui freine la volatilisation des impuretés, en particulier le bore. La constante de temps d'élimination du bore peut ainsi être ramenée de 90 à 50 minutes.

Un autre avantage de l'invention est qu'en reportant les contraintes mécaniques sur le creuset froid métallique, le garnissage en matériau réfractaire n'a plus que le rôle thermique, ce qui en diminue le coût.

Le recours à un creuset froid inductif préserve l'avantage d'un brassage turbulent dans le bain de silicium afin d'en favoriser la purification. En alimentant la bobine 3 par une tension alternative monophasée, le champ magnétique du creuset est lui même alternatif et monophasé, ce qui présente l'avantage de provoquer le chauffage du bain en même temps que le mouvement du silicium. Cela provient de variations de flux à l'intérieur du bain qui donnent naissance à des courants induits localisés en périphérie du matériau (dans la peau électromagnétique). Cet effet est décrit notamment dans la demande de brevet européen EP-1 042 224 du demandeur déjà citée.

Le choix des fréquences d'alimentation de la bobine est fonction de sa taille et de sa forme. Par exemple, pour un creuset d'un diamètre de l'ordre de 20 cm pouvant contenir une charge de silicium de l'ordre de 10 kg, on peut travailler avec une fréquence de l'ordre de 7 kHz.

Bien entendu, la présente invention est susceptible de diverses variantes et modifications qui apparaîtront à l'homme de l'art. En particulier, les gaz utilisés seront choisis en fonction des impuretés devant être éliminées. De plus, les dimensions des différents éléments de l'installation sont à la portée de l'homme du métier à partir des indications fonctionnelles données ci-dessus et de l'application. En particulier, bien que l'invention ait été décrite en relation avec un creuset de forme cylindrique, le creuset pourra en pratique avoir une forme tronconique pour faciliter sa vidange du silicium purifié, pourvu que la variation de diamètre reste compatible avec un chauffage par induction.

## Revendications

1. Installation d'affinage du silicium, comportant un creuset froid inductif sectorisé ayant une paroi externe sectorisée (1), **caractérisée en ce que** l'intérieur de la paroi externe sectorisée est garni d'une paroi interne sectorisée (4), en matériau réfractaire, les secteurs successifs (41) de la paroi interne sectorisée étant disposés les uns contre les autres, et, les séparations que lesdits secteurs de la paroi interne sectorisée (4) présentent entre eux ne sont pas radialement alignées avec les séparations que présentent entre eux les secteurs de la paroi externe sectorisée (1).

2. Installation selon la revendication 1, dans laquelle la paroi externe sectorisée (1) est métallique, chacun des secteurs comprend au moins deux conduits (12,13) d'écoulement d'un liquide de refroidissement, et un enroulement (3) est bobiné autour de ladite paroi externe sectorisée pour permettre un chauffage par induction du silicium contenu dans le creuset.

3. Installation selon la revendication 1 à 2, dans laquelle le fond du creuset est constitué d'au moins deux plaques (5) en matériau réfractaire superposées.

4. Installation selon l'une quelconque des revendications 1 à 3, comportant en outre une torche à plasma inductive (7) dirigée vers la surface libre d'une charge de silicium (s) contenue dans le creuset.

5. Installation selon la revendication 4 ou les revendications 3 et 4, dans laquelle une plaque métallique est prévue en dessous d'une ou des plaques réfractaires de fond (5).

6. Installation selon l'une quelconque des revendications 1 à 5, dans laquelle ladite paroi interne sectorisée réfractaire (4) est en silice.

## Patentansprüche

1. Siliziumraffinationsanlage, die einen sektorisierten kalten Induktionstiegel mit einer sektorisierten Außenwand (1) umfasst, **dadurch gekennzeichnet, dass** das Innere der sektorisierten Außenwand mit einer sektorisierten Innenwand (4) aus feuerfestem Material versehen ist, wobei die aufeinanderfolgenden Sektoren (41) der sektorisierten Innenwand gegeneinander angeordnet sind und die Abtrennungen, die die Sektoren der sektorisierten Innenwand (4) untereinander aufweisen, nicht radial auf die Abtrennungen, die die Sektoren der sektorisierten Außenwand (1) untereinander aufweisen, ausgerichtet sind.

2. Anlage nach Anspruch 1, wobei die sektorisierte Außenwand (1) metallisch ist, jeder der Sektoren mindestens zwei Leitungen (12, 13) für den Durchfluss einer Kühlflüssigkeit umfasst und eine Ummantelung (3) um die sektorisierte Außenwand gewickelt ist, um eine Induktionserwärmung des in dem Tiegel enthaltenen Siliziums zu ermöglichen.

3. Anlage nach den Ansprüchen 1 bis 2, wobei der Boden des Tiegels aus mindestens zwei übereinandergelegten Platten (5) aus feuerfestem Material besteht.

4. Anlage nach einem der Ansprüche 1 bis 3, die außerdem einen Induktionsplasmabrenner (7) umfasst, der gegen die freie Oberfläche einer in dem Tiegel enthaltenen Beschickung von Silizium (s) gerichtet ist.

5. Anlage nach Anspruch 4 oder den Ansprüchen 3 und 4, wobei eine metallische Platte unter einer oder den feuerfesten Bodenplatten (5) vorgesehen ist.

6. Anlage nach einem der Ansprüche 1 bis 5, wobei die feuerfeste sektorisierte Innenwand (4) aus Silizium ist.

## Claims

1. A silicon refining installation, comprising a cold sectorized induction crucible having an external sectorized wall (1), wherein the internal surface of the external sectorized wall is lined with an internal sectorized wall (4), made of a refractory material, with the several sectors (41) of the internal sectorized being arranged against one another, and with the separations of said sectors of internal sectorized wall (4) being not radially aligned with the separations of sectors external sectorized wall (1).

2. The installation according to claim 1, wherein said external sectorized wall (1) is made of metal, each sector comprises at least two ducts (12, 13) for the flowing of a cooling liquid, and a winding (3) is wound around said external sectorized wall to enable a heating by induction of the silicon contained in the crucible.

3. The installation according to any of claims 1 to 2, wherein the bottom of the crucible is formed of at least two superposed refractory material soles (5).

4. The installation according to any of claims 1 to 3, further comprising an inductive plasma torch (7) directed towards a free surface of a silicon load (s) contained in the crucible.

5. The installation according to claim 4 or claims 3 and 4, wherein a metal plate is provided under at least one of the bottom refractory soles (5).

6. The installation according to any of claims 1 to 5, wherein said internal sectorized refractory wall (4) is made of silica.
